# EUROPEAN PATENT APPLICATION

(11) **EP 1 137 210 A2**
(43) Date of publication of application: **26.09.2001**
(21) Application number: 01106523.2
(22) Date of filing: 15.03.2001
(51) Int. Cl.: H04H 1/00

(54) **Device for providing music and information to the passengers in a car**

(30) Priority: 20.03.2000 US 531588
(71) Applicant: MATSUSHITA ELECTRIC INDUSTRIAL CO., LTD., Kadoma-shi, Osaka 571-8501 (JP)
(72) Inventor: Ihara, Yasuhiro, Walled Lake, Michigan 48390 (US)
(74) Representative: Eisenführ, Speiser & Partner

(57) **Abstract**

The present invention provides a communication terminal that provides music/information, the object of which being to provide music/information to drivers in a safe manner by utilizing communication function. The communication terminal registers the driver's preference in the information server in advance. A program is structured according to configuration of the order of information provision. A car-installed device creates a program based on the configuration of the driver, and provides the program by controlling a radio, CD player, and a device for reading out text information. The car-installed device also includes operational switches for controlling the progress of a program.

## Description

### BACKGROUND OF THE INVENTION

### A. Field Of The Invention

The present invention relates to a music-information provider device for receiving music and information in a car, the information and music being selectively sent by an information provider according to information configured by the driver and his location. The present invention further relates to a music-information provider device having various functions such as playing packaged audio, receiving radio broadcast, hands-free phone, and route guidance.

### B. Description Of The Related Art

An example of an information provider device includes the "Internet Service, Provider Device" shown in Japanese Unexamined Patent Application 11-259497. Figure 13 shows a block chart of the conventional technology.

In the first example of conventional technology, the information provider device is called a client personal computer 3. The client personal computer 3 includes reference acknowledging portion 31 for administering and acknowledging users and passwords, a WWW browser 32 for outputting tagged information, and display/confirmation tablets 33.

The information provider includes a WWW server 1 for providing information on the Internet, provision information 11 having server information category data 12 and definition data 13 for continuing to provide information, and server information modifier 14 for modifying the provision information 11.

A control device 2 refers to information sent from the WWW server 1 and preference information 21 of the individual user A, so as to send to the client personal computer 3 only information that matches the user's preference.

In this structure, by deleting information that is not needed by the information service user who uses the client personal computer 3, information that the user wishes has been easily obtainable.

In an information provider device (called internet service provider device in the example of conventional technology) according to such conventional technology, the user obtains the information he/she wants efficiently by deleting information that the user does not want. However, application of this technology in uses inside a car has following problems.

First of all, since the conventional technology is meant to be for WWW browsers used in personal computers, information is displayed on the screen, such that the user can visually obtain the information. Accordingly, it is difficult for a driver of a car to obtain the information. Although it is possible to read out the information to turn the information on the screen into audio data, the operation of selecting information is difficult. It is dangerous for the driver to perform the selection because it interferes with the driving operation.

If speech recognition technology is utilized to perform operations without using visual information, operation menus can be read out such that the user can make a selection. However, since the display/operation method is designed for visual use, there are too many menus and selections to be read out. Therefore, it is extremely difficult for the driver to perform the operation, and the driving operation may be affected.

Also, the information provider device provides information such as news and shopping. Since the information provider device does not cooperate with a car audio which is generally used in a car, the user had to switch between the client personal computer 3 and the car audio to obtain information and music.

### SUMMARY OF THE INVENTION

This invention has been conceived to overcome the problems in the aforementioned conventional technology. More specifically, the first embodiment includes communication means for communicating by communicating with an information provider station the structure and contents of programs that the user customized. The first embodiment further includes program control means for playing music and information of the user's choice in the order of the user's choice during the driving, when safety is of importance.

The second embodiment includes a program control means having an audio device as one of the devises to be controlled, memory means for receiving information obtained from the communication means and information sent by the broadcast receiving means via the selection means, text-to-speech conversion means for converting text to speech, audio play means for playing audio from digital data, and operation process means for controlling the aforementioned means.

### BRIEF DESCRIPTION OF THE DRAWINGS

Figure 1 shows a block chart of a data provider in accordance with the first embodiment of the present invention.

Figure 2 shows an explanatory view of an information service system in accordance with the first and second embodiments of the present invention.

Figure 3 shows a flowchart of an operation in accordance with the first and second embodiments of the present invention.

Figure 4 shows an example of configuration screen for selection of traffic information in accordance with the first and second embodiments of the present invention.

Figure 5 shows an example of configuration screen for configuring profiles in accordance with the first embodiment of the present invention.

Figure 6 shows an image view of the structure of a information terminal in accordance with the first and second embodiments of the present invention.

Figure 7 shows a block chart of a data provider in accordance with the second embodiment of the present invention.

Figure 8 shows a flowchart of a broadcasting receiving process in accordance with the second embodiment of the present invention.

Figure 9 shows an example of configuration screen for configuring profiles in accordance with the second embodiment of the present invention.

Figure 10 is an example of configuration of programs and channels in accordance with the second embodiment of the present invention.

Figure 11 is an example of recommended data screen in accordance with the second embodiment of the present invention.

Figure 12 shows an example of format of profiles in accordance with the second embodiment of the present invention.

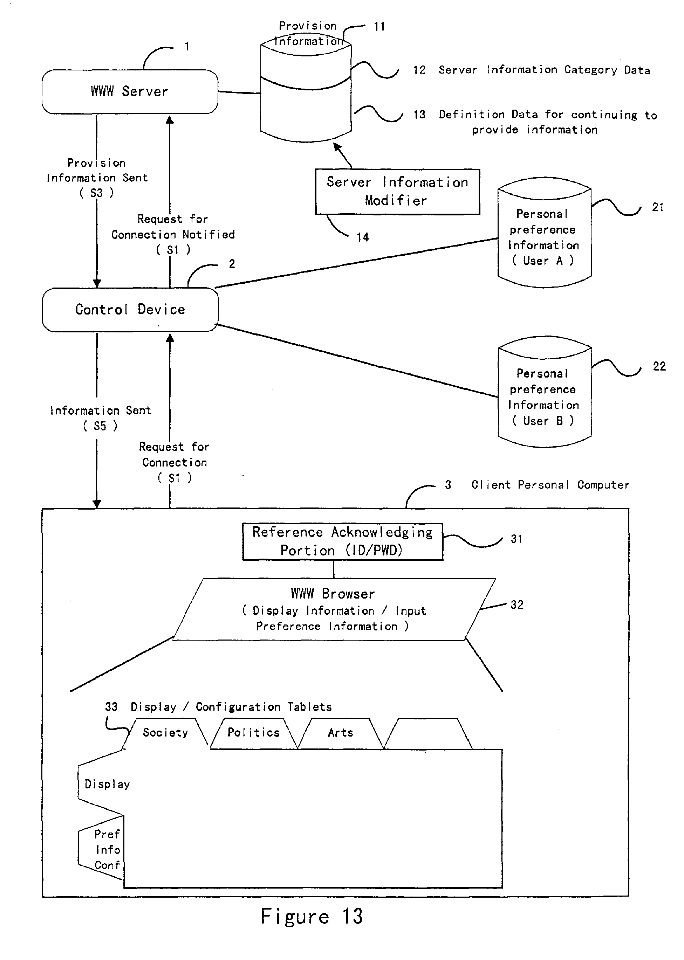

Figure 13 is a structure of an internet service provider device of the conventional technology.

### DESCRIPTION OF THE PREFERRED EMBODIMENT

Embodiments of the present invention will now be described with reference to figures.

### [First Embodiment]

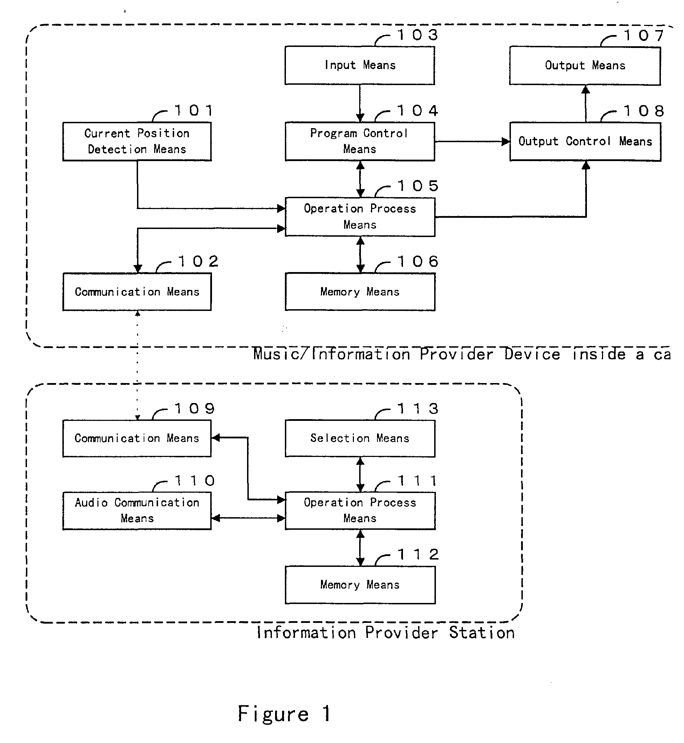

Figure 1 is a block chart of a music-information provider device in accordance with the first embodiment of the present invention. In Figure 1, 101 is current position detection means for detecting the current position of the vehicle. The detection of the current position can be performed by a satellite positioning such as GPS (Global Positioning System), or by Dead reckoning that utilizes map data having road structures recorded therein and a sensor that detects the direction in which the vehicle moves and the moving distance. Alternatively, the current position can be detected by a combination of the two methods, or by another current position detection method in which electronic waves from a base station of wireless communication, or wireless phone combined with satellite positioning device. 102 is communication means that obtains music data and various information from the information provider station. Example of 102 is a wireless phone. 103 is input means that detects operation of the user and reports the operation to program control means 104. The program control means 104 controls progress of programs according to profiles that include data providing priority configured by the user (driver) and retrieved from memory means 106.

The program control means structures programs of the user's preference and controls output control means 108 according to controls from the input means 103 and operation process means 105. For instance, the output control means plays digital music decoded at the operation process means 105 and/or controls volume, according to signals from the program control means 104 to output to the output means 107. The data provided to the user is mainly audio and sound, but can also be displayed on the screen.

On the other hand, the data provider station includes communication means 109, audio communication means 110, memory means 112, selection means 113, and operation process means 111. The communication means 109 communicates with the music-information provider device of the vehicle. The audio communication means 110 includes both speech recognition ability and text-to-speech conversion ability. The memory means 112 stores audio data such as various information, music and talk shows, and profiles of users. The selection means 113 selects information and audio data of user's choice according to profile of each user. The operation process means 111 administers users and controls the above described means. The communication means 109 can communicate with not only music-information provider devices in vehicles, but also regular personal computers and wireless information terminals. It is also possible to obtain and/or configure data via voice through fixed-line phone and wireless phone via audio communication means 110.

Since it can be difficult to configure some of detailed configuration information in the user's profile using the music-information provider device in the vehicle, it is also possible to perform configuration using a personal computer, wireless information terminal or phone. The music-information provider device in the vehicle can be a device that is installed in the vehicle, or can be a wireless information terminal or personal computer brought into the vehicle to be utilized as a music-information provider device. These devices can be other devices having communication ability, such as a wireless phone or satellite phone, as long as they include elements shown in Figure 1.

The operation of the music-information provider device (hereinafter called information terminal) having the aforementioned structure in accordance with the first embodiment will now be explained. Here, the object is for the user of the information terminal to obtain music and data of his choice safely while driving a car.

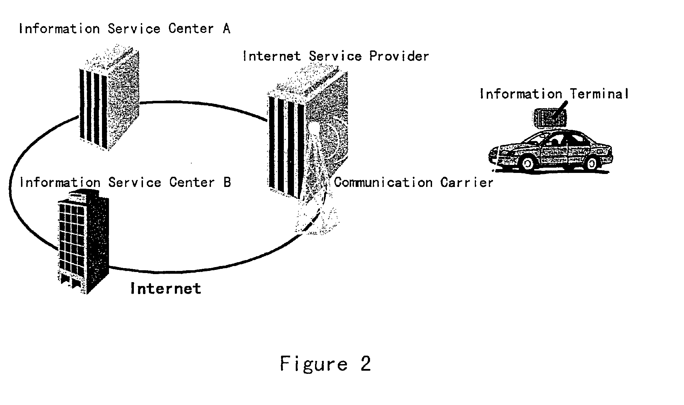

First of all, the communication environment in which this embodiment operates will be explained. In this embodiment, a information terminal of car-installed type or portable type needs to be able to connect to the data provider service center (hereinafter called center) from a car that is in motion. Figure 2 is an explanatory view of the communication environment in which the present embodiment operates. In this view, the information terminal on the right hand side connects to an internet service provider via a closest access point. The internet service provider offers internet connection services, issues IDs to its subscribers, and provides services such as electronic mail and home page hosting. The access point generally changes depending on where the user is, but may be the same access point.

If data service of wireless communication carrier such as wireless phone is to be utilized, a base station that covers communication area called "cell" may function as the aforementioned access point. Computers in the base station and ones in the carrier convert communication protocol and data format, whereby the user is connected to the Internet. In this case, the carrier functions as the internet service provider.

Typically, the internet service provider and information terminal are connected via wireless phone and/or satellite communication/broadcast systems. Communication protocols utilized are PPP (Point-to-Point Protocol) and WAP (Wireless Application Protocol) and so on. PPP can handle TCP/IP packets, which is the standard on the Internet. Therefore, with PPP, a user can connect to a center of his choice via the internet service provider by simply specifying at the information terminal the URL (Uniform Resource Locator) of the desired center. In this case, the internet service provider is merely transferring TCP/IP packets, not performing any special process. As a result, it appears to the user of the information terminal that the user is connecting to the center directly. Although WAP and imode utilize proprietary packets to improve efficiency of wireless communication, the method of communication is similar to TCP/IP of the Internet.

Accordingly, the user of the information terminal can receive data from a plurality of centers by simply changing the URL of the data source center, such as from center A to center B. The URL required at this time may be pre-stored in the information terminal, or may be provided by the internet service provider. Generally, however, the user searches for the URL using a center called search engine, in which the user can search for the URL by a keyword.

There are various types of centers such as ones which offer data search functions as services, ones which offer news and weather forecast, ones which collect and organize detailed information of limited specific fields, ones which offer music and talk as radios, and ones which offer videos. In this embodiment of the present invention, however, there is only one contact center that contacts the user in the car, such that this center administers user information and profiles of registered users.

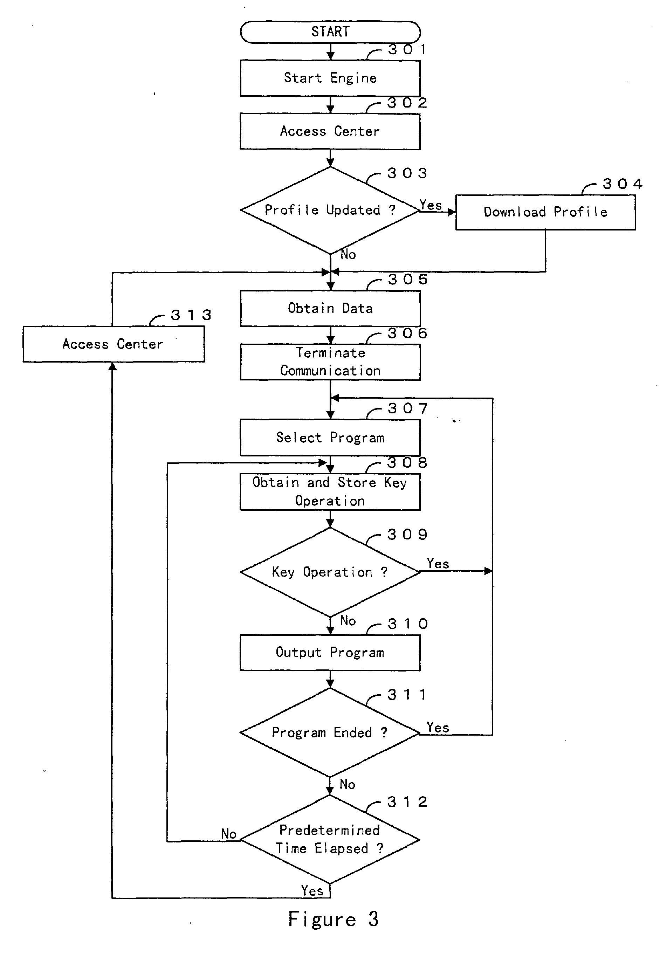

Figure 3 shows a flowchart of an operation of the information terminal in accordance with the first embodiment of the present invention. The operation will now be explained referring to the flowchart.

In step 301, the user starts the engine of the car. The information terminal may have wireless phone function embedded therein, or the user may use a separate wireless phone by connecting the wireless phone to the information terminal. When the user uses a separate wireless phone connected to the information terminal, the wireless phone should be turned on and be connected to the information terminal in step 301.

In the next step 302, the information terminal accesses the center. At this time the information terminal first sends the current position of the vehicle to the center. In step 303, it is determined whether the user profile has been updated. If the profile has been updated, the information terminal proceeds to step 304, and downloads the profile of the user stored in the center. When the information terminal is as it has been initially shipped out, the user can use a default profile pre-stored in the terminal, or obtain a default profile from the center when the user accesses the center for the first time.

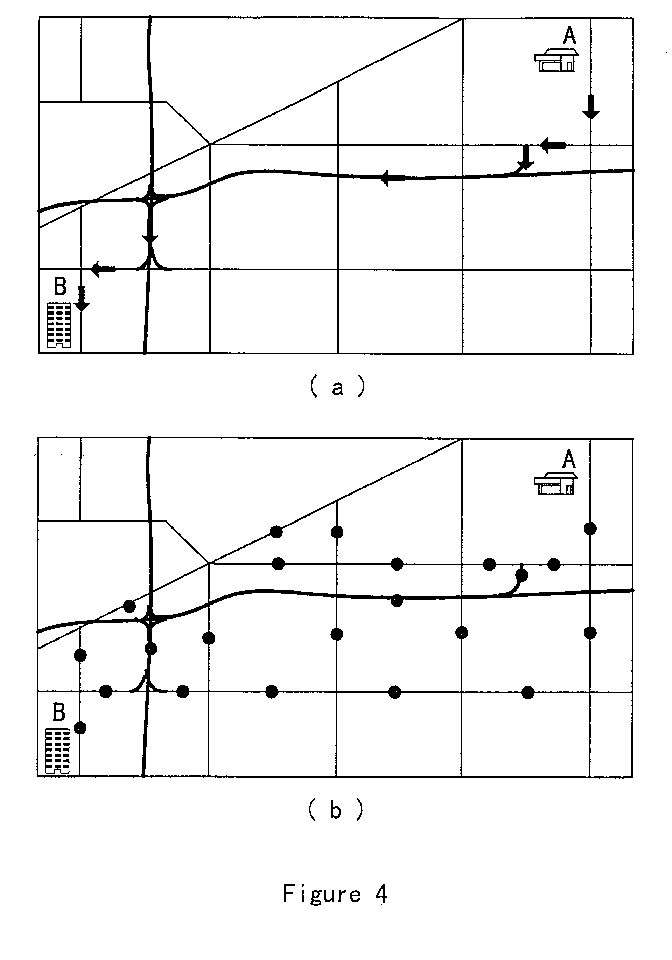

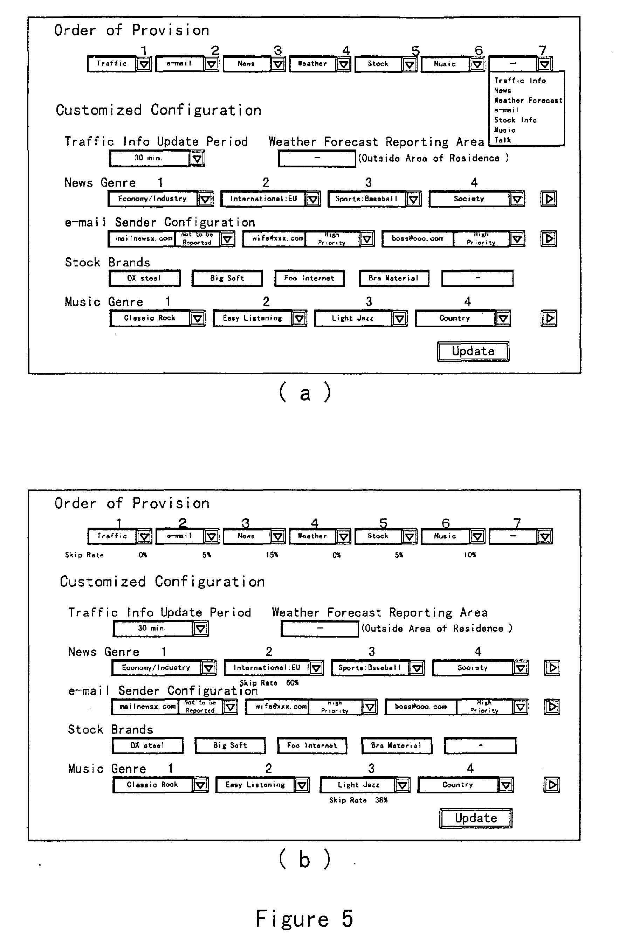

Contents and configuration method of the profile will now be explained with reference to Figures 4 and 5. The profile is established to let the user select data of his needs. The profile includes data such as frequently used roads and music he likes.

The profile can be configured through the information terminal installed in the car. However in this embodiment, the profile is configured by the user accessing the center via the Internet using a personal computer. The user further utilizes a generally used Web browser (HTML browser) to access the Internet.

In order to select traffic data of the user's needs, the user first marks Home A and Office B on a map displayed on the Web browser shown in figure 4(a). The commuting path is registered by marking arrows on the roads which represent his commuting path. The user selects an arrow that points to the pertinent direction, and drags and drops the arrow on the map, thereby specifying the road. The coordinate in the map on which the arrow is dropped is then sent to the Web server of the center using the CGI (Common Gateway Interface). At the center, the road is identified by the coordinate and the range of map displayed, and registered in the database. The Home A and Office B are registered in the similar manner. Path to work and path from work, and/or a plurality of commuting paths can be registered in the similar manner. In the case where a plurality of commuting paths is registered, the paths should be registered by giving a name to each path, such as "Path to work by highway" and "path from work by only local streets". The user can also register roads of which he wishes to know the traffic situation, as symbols such as • attached to the roads as shown in figure 4(b), instead of registering them as paths.

The user can perform the aforementioned configuration via phone, using the audio communication means 110 of the center. In this case, the user first reads out the addresses or the phone numbers of Home and Office, such that the locations of Home and Office can be registered. The roads of which the user wishes to know the traffic situation should be registered by reading out the names of the road and intersections. Although it is somewhat more complicated than the case with the Web browser, the dialog process created by the speech recognition device and text-to-speech conversion device of the center can register the commuting path, names of paths, and roads of which traffic data is desired.

Now, configuration of programs will be explained with reference to Figure 5(a). Figure 5(a) is an image displayed on the web browser during configuration of data contents and the order of data provision. In this example, data are to be provided in the order of traffic information, e-mail, news, weather forecast, stock information, and music. Talk is configured not to be provided at all. Although various ways of configuration are possible, this embodiment shows an example in which a GUI (Graphical User Interface) part, generally known as combo box is utilized. In this GUI part, a list of options is displayed by clicking the button with a V mark. The list of options is displayed as shown in the right hand side top portion of Figure 5(a), the seventh in the order of data provision. The user selects a desired item from the list of options. Here, " - " means that configuration is not necessary. Further, the ∇ mark pointing to the right means that there are more items on the right hand side not displayed on the screen. By clicking this button, items are scrolled and new items are displayed.

With regard to the traffic information, only traffic information pertinent to the user is provided based on the roads or direction in which the user passes the road configured in the aforementioned manner shown in Figure 4. If a plurality of paths is configured as a path to work or a path from work, and if there is a traffic jam in one of the configured roads, the traffic information may suggest the road in which there has been no accident or traffic jam. For instance, where the user has registered "Path A" and "Path B" as his paths to work, when there was an accident on "Path A" while there has been no traffic jam on "Path B", the traffic information suggests "Path B". Or, the user may utilize the route guidance function for a path to work only when there has been an accident or traffic jam that may affect the path. The user obtains the latest traffic information by accessing the center every certain period of time which has been configured as a period for updating traffic information. This process will be explained later referring to the flowchart shown in Figure 3.

With regard to weather forecast, normally the forecast of the area of the residence will do. If the user wishes weather forecast of other areas, he writes in the box under the weather forecast an area to be reported. The postal code or area code of the region or the name of the city may be utilized to specify the region.

With regard to news genre, the user configures the news genre of his choice and the order of preference using the combo box, similar to the configuration of the order of program provision. Although this example shows only 4 items, the user may be able to specify many more items.

With regard to e-mail, the user changes the ways of confirming receipt depending on the mail sender, such that e-mail can be securely conducted in the car. For instance, a regular mail is to be checked every time the car is used, or only once in every 30 minutes, such that e-mail notification does not interfere with the user's driving. This process can be easily achieved by controlling the confirmation timing of mail receipt at the center. Since e-mails are generally read out by the text-to-speech conversion process in the car, it is possible to make a configuration by which the receipt of a mail is not to be reported if the mail is not fit for being read out, such as a long news mail or an advertising mail. Since such mails are better read from a information terminal or wireless information terminal at home or office, the server does not report mails from the sender which is configured as "Not to report", and in stead leave the mails as unread. The administrator of the data provider center registers in the server senders of regular advertising mails, such that by default these advertising mails will not be reported. This default setting does not apply to position-dependent advertising mails directed to users in the car. Position-dependent advertising mails include, for instance, advertisements of lunch discount sent by a restaurant on the road on which the user is driving. In other words, such advertising mails are designed to be for the drivers.

With regard to mails with high priority, the user can register the names of the senders such that mails from them will be reported to the user even while the user is driving. For instance, such mails can be mails from family. In this case, the center accesses the server that administers the user's e-mail (this server is often operated by a separate company) every 1 minute to see if there is any mail to the user. If there is a mail with high priority, the center notifies the mail to the information terminal in the car.

In this example, e-mail service is customized by the names of senders. However, other data such as subject, date of sending, and keyword in the sender or subject can also be utilized for customization with a similar process.

With regard to stock information, the user inputs a name of the stock he pays attention to. The stock can be identified either by the company name, or by the ticker symbol of the NYSE or Nasdaq.

With regard to music genre, the user registers the genre of his choice with the order of preference. The combo box is again utilized in this case.

Once the aforementioned configuration is performed, the user profile is updated by pushing the update button. When the user uses the car next time, the update of the profile is recognized in step 303, such that the updated profile is downloaded to the information terminal in the car in step 304. Since the configuration shown in Figure 5(a) is detailed and complicated, the center can provide a few profiles that match typical patterns of users. In this manner, the user can select from the pre-provided profiles, or the center can provide a default profile based on the user's age, gender, and residence, or results of simple questions given to the user.

It is also possible to have the user make the aforementioned configuration by voice with a phone call, by virtue of the audio communication means 110 of the center. In this case, although it is somewhat more complicated than the case with the Web browser, by using the dialog process, the user can perform the same process as the case in which items are selected using the combo box.

By the profile configuration through Web browser and the processes through step 304, the profile customized by the user is stored in the information terminal. In the next step 305, the information terminal obtains music and information distributed to the center after the selection according to the profile is made. The music data is generally digitally compressed data such as MP3 (MPEG 1 Layer3) or AAC (Advanced Audio Codec). The data of which less quality is required, such as talk show data, is compressed with a method having higher compression rate. Information can also be distributed as audio compressed data. However, to utilize the limited communication bandwidth more efficiently, it is more common to distribute information as text data and provide the information to the user by reading the text out using the text-to-speech conversion process of the information terminal.

Once the user obtains the data, the communication is terminated in step 306. If the communication is a packet-based communication in which there is not "start/end" of communication, this step can be ignored.

Step 307 includes the features of the present invention. In this step, the programs to be provided to the user are selected. The programs to be provided are determined based on the user's profile, the progress situation of the program, and the key operation of the user obtained and stored in step 308. In the profile shown in Figure 5(a), the paths that the user uses and of which the user wishes to know the traffic situation are selectively provided. In this case, the center determines the direction of the commuting path based on whether the current position of the vehicle reported to the center in step 302 is close to home or office, the day of the week and time, and whether the user is going to work or home. If there is a key operation by the user, the process returns to step 307 from step 309 to reselect the program.

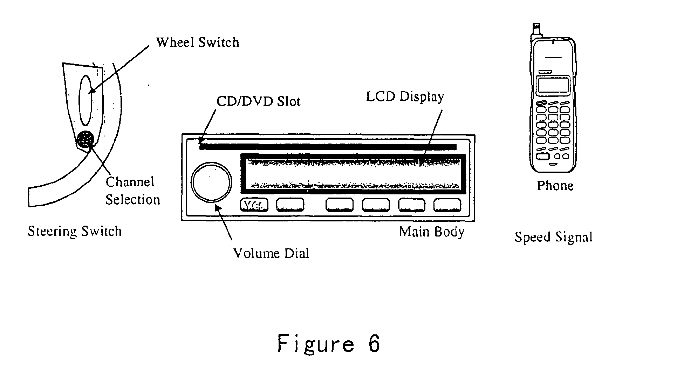

Key operations are operation of a steering switch and/or volume dial of the main body shown in the device structure view of the information terminal in Figure 6. By operating the wheel switch of the steering switch, the progress of the program to be provided can be controlled. For instance, the program currently provided is skipped to the next program if the user rotates the wheel to below the 1 notch. The current program is repeated if the user rotates to above the 1 notch. The previous program is played if the wheel is rotated to above the 2 notch. Instead of the wheel switch, other type of switch can be utilized for this operation. The user can also operate by voice command such as "Skip", "Repeat", and "Back", using the speech recognition process.

If there has been no such key operation, the process proceeds to step 310, where the program is provided. The program is provided mainly by playing the digitally compressed audio and reading out text by text-to-speech conversion process. In step 310, these processes are controlled. During the control of the audio playing, the flowchart proceeds to step 311 instantly without waiting for the program to end. In step 311, it is determined whether the program has ended. If the program being provided has ended, the process returns to step 307, where next program is to be provided. As the programs progress, it may be effective to insert a speech by a virtual disk jockey from digital recording or speech created from text, such that the user will not notice the time required for confirmation of operation and switching of programs.

If the program being provided is still on-going, the process proceeds to step 312, where it is determined whether a predetermined period of time has elapsed for data update from the center. For instance, in the example shown in Figure 5(a), the update period for traffic information is configured as 30 minutes. Therefore, in step 312 the process determines whether 30 minutes have elapsed since the information terminal accessed the center in step 302. If the period has elapsed, the information terminal accesses the center again in step 313 to obtain the latest traffic information and repeat the aforementioned processes. If the period has not elapsed, the process returns to step 308 to continue to provide the program. If the user wishes to access the center every time he uses the car and only once during the ride, the period of time for data update should be longer than the regular commuting time. Since there is always a time lag in the actual traffic information provided, and since it is often impossible to avoid a traffic jam caused by an accident that happened nearby, there will not be a need to update traffic information many times if the commuting time is only 15-30 minutes.

If it is configured such that the center distributes updated information to the information terminal at a predetermined interval, there is no need for step 312 and step 313. Similar effect can be achieved by the periodical update of program contents selected in step 307.

In the aforementioned process, the user can customize the desired program structure and information contents in advance using a personal computer. Therefore, while the user is driving, when the safety is important, the information terminal in the car provides the desired music and information in the order of his choice. Accordingly, the user needs to operate the devices less frequently. Also since the user can control the progress of the program with a simple operation, there is minimum effect on driving operation when the user skips news he is not interested in or repeats information he failed to catch.

Besides, volume control can be performed by step 308 and step 310, further reducing unnecessary operations. More specifically, the position, vehicle speed, and volume at the time the user operated volume adjustment are memorized in step 308. A user tends to change the volume depending on whether he is on a regular road or highway. Especially, a user tends to increase the volume as the road noise that increases with the vehicle speed increases. Therefore, by memorizing the user's volume operation and outputting the program in step 310 with its volume configured based on the position and the vehicle speed, the user needs to operate volume control less often on the same commuting path.

Moreover, it is possible to change the order of provision and order of priority by memorizing the key operation at step 308, such that the program that the user skips often can be of a lower priority. For instance, if International: EU related news of a news genre of the Figure 5(a) has been skipped more than 50% of times, the priority of the news genre can be lowered by one. In this case, if the user has skipped 5 of 10 EU-related news, its order of priority is lowered from 2 to 3.

In this manner, the records of key operations memorized in step 308 are useful in many ways. By sending the record to the center in step 302, the record can be useful in updating the next profile as well. Figure 5(b) is an image displayed on the screen for updating the profile where the record of key operations has been sent to the center in step 302. The difference between this screen and the one shown in Figure 5(a) is that this screen shows the skip rate on the Web browser. The skip rate is the number of skip operations divided by the number of times the information has been provided. In this example, the skip rate is shown on all items under the order of provision. Only the skip rates of more than 30% are shown in the items under customization. By displaying skip rates in this manner, the user can easily see which items have a high skip rate, making it even easy to customize and allowing even more efficient music/data provision. Therefore, music/data can be provided to the user without affecting the safety during the driving.

Although the skip rate has been explained as data effective in customization, other indicia of operations, which indicate the level of usage of each program may also be utilized.

As in the above explanation, according to this first embodiment, a user can customize the desired program structure and program contents in advance. As a result, while the user is driving, when the safety is of importance, the desired music and data are provided in the desired order. Accordingly, the user needs to operate devices less frequently. Moreover, since the present embodiment allows the user to perform simple controls such as skipping and repeating of programs with simple operations, the effect of the operations on driving is minimum. Furthermore, by reflecting the record of user's operation on the volume adjustment and program structure, even more user's operation can be avoided.

Therefore, the present invention enables provision of music and data to driving users in a safe manner.

### [SECOND EMBODIMENT]

Next, the second embodiment which has the similar structure as the first embodiment will be explained. The information terminal of the second embodiment is the same as in the first embodiment in its basic portion, although the information terminal of the second embodiment cooperates with package/broadcasting audio play ability. The information terminal of the second embodiment further includes functions of hands-free phone and car navigation. The second embodiment not only provides music/information via communication function but also integrates music/information from package/broadcasting media and operations for using hands-free phone and car navigation function.

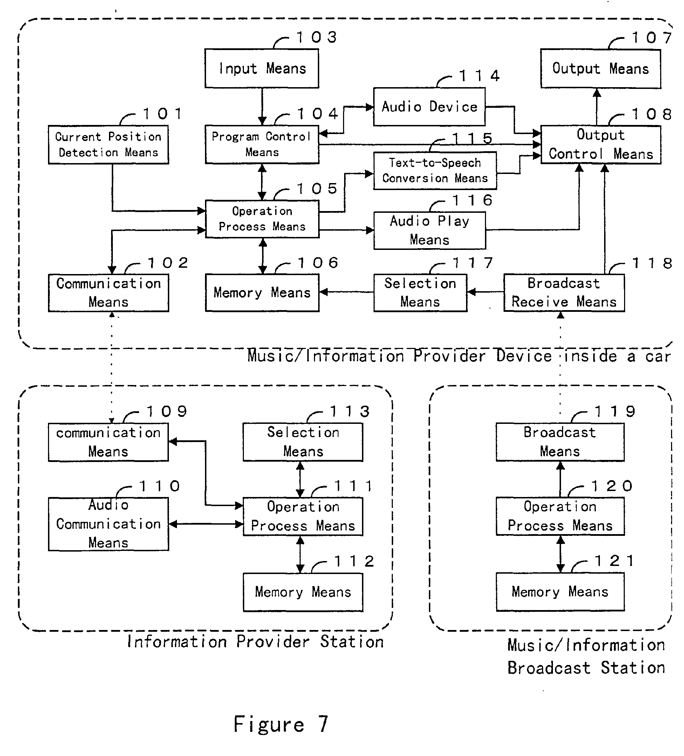

Figure 7 is a block view of the structure of a information terminal in accordance with the second embodiment of the present invention. Means in Figure 7 that appear in Figure 1 have the same referential numerals. Therefore, only blocks that are newly added in Figure 7 will now be explained. 114 is an audio device. Examples of 114 include optical disk music (recording) players such as CD (Compact Disk), MD (Mini Disk), DVD (Digital Video Disk) players, and CD changer, and a regular car audio devices such as cassette player. Players for audio data digitally compressed by MP3 or AAC can also be used. These audio devices 114 have communication function for receiving controls from program control means 104 to seek and play a song, and transfer data such as song name and artist name. The playing ability of digital audio can also be found in the audio player means 116 inside the information terminal. The text-to-speech conversion means 115 creates a speech by reading out texts stored in the memory means 106. The text-to-speech conversion means 115 significantly reduces communication cost and the speed of information communication.

The second embodiment has a block of music/information broadcasting station. In this block, the operation process means 120 broadcasts various music/information contents via broadcasting means 119. Broadcast receiving means 118 of the information terminal inside the car receives the broadcast. If the broadcast receiving means 118 receives analog broadcast such as AM/FM broadcast, there is no data for determining the contents of the broadcast. Therefore, the receipt of the broadcast is sent to the output control means 108. The content of AM/FM analog broadcast is provided to the user via the output means 107 when it is designated as a program to be provided according to the user profile. FM multi-frequency broadcast, digital terrestrial broadcast (radio and television), and digital satellite broadcast (radio and television) broadcast digitally compressed audio data. In such broadcasts, the broadcast includes data that indicates the contents of the broadcast. Therefore, when the broadcast receiving means 118 receives the broadcast, the selection means 117 selects only the data that meet the user's preference according the user profile, and stores them in the memory means 106.

The operation of the information terminal in accordance with the second embodiment having the aforementioned structure will now be explained. The object here is for the user of the information terminal to safely obtain music and information of his choice while driving a car.

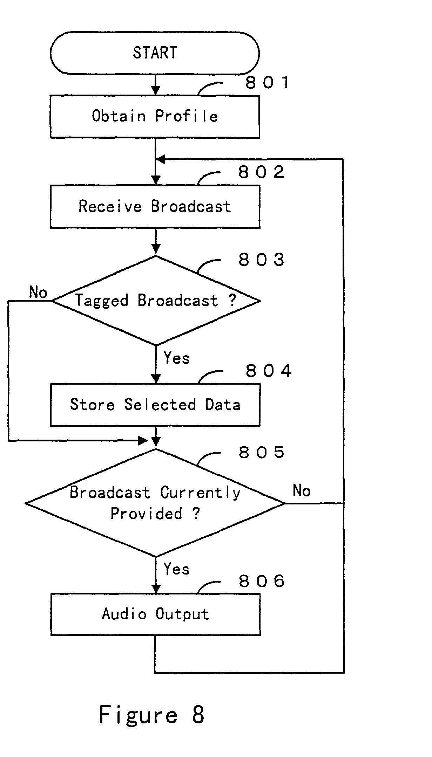

Since basic flow of the process is the same as the one shown in Figure 3, only the processes different from the previous one will be explained. Figure 8 is a flowchart of operational processes that the information terminal performs on broadcast programs. The operation will be explained referring to Figure 8. The processes explained herein are to be conducted parallel to the processes after step 304 in Figure 3.

In step 801, the information terminal obtains the user profile and information regarding the desired broadcast programs. Extended profile of the second embodiment will be explained later. In the next step 802, the information terminal receives broadcast specified in the profile, and proceeds to step 803. In this step, the information terminal determines whether the broadcast it received has data that indicates contents of the broadcast. The data that indicates contents of the broadcast is generally given as a tag in XML (eXtensible Markup Language). If the broadcast is tagged, the information terminal proceeds to step 804. In step 804, the tag of the broadcast is compared with the profile, such that only the broadcast data of the user's choice will be selectively memorized. Then the information terminal proceeds to step 805. If the broadcast is not tagged, the information terminal proceeds from step 803 to step 805.

In step 805, it is determined whether there is a need to provide the broadcast program to the user. The programs to be provided to the user include, apart from the broadcasts, music/information explained in the first embodiment, and packaged music from a CD player. The program to be provided is determined based on the user profile, which will be explained later, and the channel structure. If the program to be provided to the user at this point is not a broadcast, then the information terminal proceeds to step 802 to repeat the above-described processes.

If the broadcast program is to be provided to the user now, the information terminal proceeds to step 806 to perform audio output. In the audio output, the audio that the information terminal received is outputted directly if the broadcast is an analog broadcast without a tag. If the broadcast has a tag data, the audio output outputs the data stored in step 804.

The aforementioned processes are the process of program output that is to be performed in step 310 in figure 3, when a program provided in broadcasts is selected in step 307. If packaged audio such as audio stored in optical disks such as CD/CD-R (Compact Disk Recordable), DVD/DVD-R and MD or semiconductor memory, HDD (Hard Disk Drive), or cassette tapes is to be played, the information terminal simply needs to play the song selected as a program to be played.

Above is the method of program provision when the source of program is broadcast or packaged media.

Since the overall process is the same as in the first embodiment, only the processes that are descriptive of the second embodiment will now be explained with reference to Figure 3.

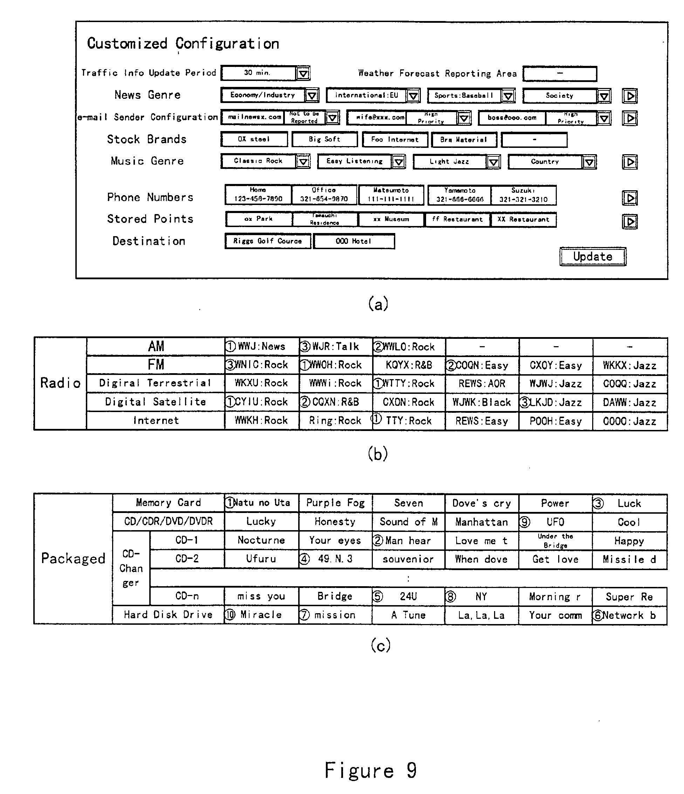

In step 302, when the information terminal accesses the center, the information terminal sends data regarding the devices installed on the car. If the car has an AM/FM radio, digital terrestrial radio, and/or digital satellite radio receiver, the information of these installed devices is sent to the center. Since the radio broadcast on the Internet can be received by any communication device that has the functions which the information terminal of the present invention is assumed to have, there is no special receiver for radio broadcast on the Internet. The center obtains a list of broadcasting stations that offer broadcasting services in each media. This list of broadcasting stations can be obtained from the Internet, including music/information genre offered by each broadcasting station. Then, the center assigns orders of preference to broadcasting stations for each media, based on the preference in music genre specified in the user profile. When the center assigns the orders to the broadcasting stations within the same genre, the center can utilize public popular ranking of the broadcasting stations, or the ranking based on the number of times the broadcasting station is registered in other users' profiles. The list of broadcasting stations in which the broadcasting stations are prioritized for each media according to the user preference is displayed on the Web browser as shown in Figure 9(b) at the time of configuration of profile.

With regard to packaged audio devices such as CD players, the information terminal sends the device information along with data indicating contents of audio data such as the names of songs stored in media of each device. Even if the name a song is not known, if the media is a packaged product sold on the market, the name of the song can be obtained by sending the disk ID and searching the database on the center. If a ranking based on the number of times the song is selected in step 307 and played is sent to the center, the list of song names for each device can also display the ranking based on the number of times played from 1 to 10, as shown in Figure 9(c). In this manner, information effective in customization can be provided. (1), (2), and (3) in Figure 9(b) also mean the same ranking.

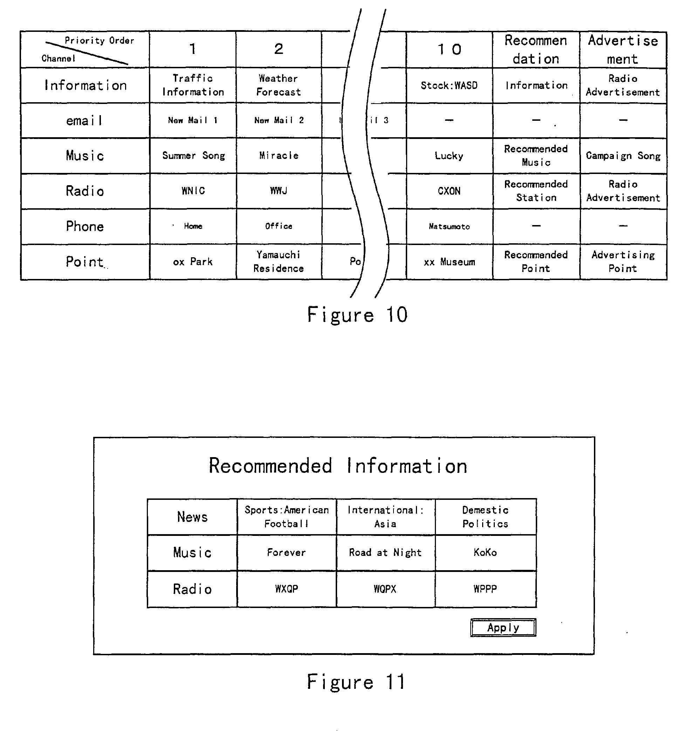

The customization configuration in Figure 9(a) is the same as Figure 5 from the item "Transportation information update period" to the item "Music genre". The order of provision in Figure 5 is compressed to channel/program configuration in Figure 10. Three items in the customization configuration, namely, telephone number, memory point, and destination are for use in hands-free function and car navigation function, and will be explained later.

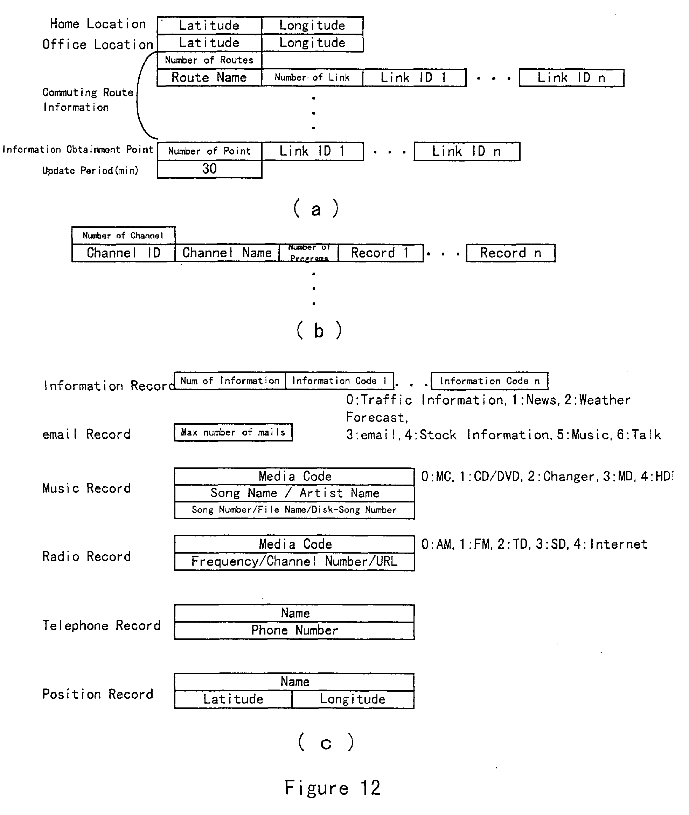

Based on the customization configuration in Figure 9(a), a list of broadcasting stations shown in Figure 9(b), and a list of song names shown in Figure 9(c), which all have the aforementioned structure, channel/program configuration shown in Figure 10 will be configured. The user profile includes the contents shown in Figure 9 and Figure 10 and the data regarding commuting paths. Data in Figure 10 and a portion of data in Figure 9 are downloaded to the information terminal in step 304. The format in this case will be explained with reference to Figure 12.

A channel/program configuration table shown in Figure 10 defines the order of programs to be provided for each channel, namely information, e-mail, music, radio, telephone, and point. The telephone and point will be explained later.

For instance, the information channel is almost the same as the first embodiment. The information channel provides information such as traffic information and weather information in a designated order. The present invention is different from the first embodiment in that the e-mail is an independent channel. However, e-mails can be an independent channel or a part of the information channel depending on the priority of the email. Since the only process performed in the e-mail channel is to merely place the receipts of mails to be reported, nothing needs to be configured in the configuration on the Web. If necessary, however, the maximum number of mails can be configured.

By including recommendation and advertisement from the center as a low priority program of the information channel, the user can have a wider range of programs to choose from. Also, the service fee can be reduced by virtue of advertisement revenue. For instance, a news program which is popular within the news genre but has not been configured by the user is provided as a recommended information. If the user does not like the recommended information, he can skip the program. If the user likes the program, the recommended information which the user has not skipped appears on the screen as shown in Figure 11 next time the user performs configuration on the Web. Accordingly, the user can update the news genre selection in Figure 9(a) based on the recommended information screen. The example of Figure 11 displays three recommended programs for each of the three channels, news, music, and radio. The user can copy a recommended program to the Figure 9(a) by clicking the "Apply" button. While the number of times a program was skipped was utilized to narrow down the profile in the first embodiment, this recommendation is for widening the range of programs from which the user can make a selection.

Similarly, the advertisement can be useful information for the user. At the same time, the advertisement allows reduction of service rates.

The music channel is similar to the programming function of a CD player in that it places songs of packaged music. The music channel is different from the existing program function in that the music channel can program an order in which songs from various packaged media are mixed. For instance, in the example of Figure 10, it is configured such that the first song is to be played from a memory card, the second song from a hard disk, and a tenth song from a CD. This configuration can be made by merely selecting songs of choice from a list of songs shown in Figure 9(c), and designating the desired order in the music channel as shown in Figure 10. As a result, the programs of the music channel are stored in the information terminal in the following manner. The example of format is shown as the music record in Figure 12(c). The format includes a media code, song/artist name, and identification information of the song. The identification information varies depending on the media, and generally includes the song number, disk number and station number, or the file name.

| | | | |
|---|---|---|---|
| 1. | 0(Memory card) | Natsu no Uta/Takao Kimura | NatuUta |
| 2. | 4(Hard Disk) | Miracle/P.Jackson | miracle |
| 3. | 1(CD) | Kawa/Koichi Yoshimura | 2 |

These are data for identifying the top portion of the memory area of each song data. Based on this data, the programs are outputted in step 310 by controlling each packaged audio playing device. A user who likes music can program many songs by having additional channels "Music 2" and "Music 3". Furthermore, it is also possible to add recommended song and songs for advertisement from the center in the music channel as in the information channel.

In the radio channel, the user selects radio stations of his choice from a list of radio stations shown in Figure 9(b). The result of the configuration is stored in the information terminal in a following manner. An example of the format is shown as the radio record in Figure 12(c). Here, "TD" is terrestrial digital radio broadcast, while "SD" is satellite digital radio broadcast.

| | | | |
|---|---|---|---|
| 1. | 1(FM) | 870 (MHz) | |
| 2. | 0(AM) | 1320 (kHz) | |
| 3. | 3(Digital Satellite) | | 45 (channel) |

These data include the kind of media, the frequency and the channel number in which the broadcast is provided. These information can identify each broadcast station. In the case of internet radio, such information is the URL. The method of identifying the broadcast station is determined based on the media. Similarly in the radio channel as in the information channel, the recommended broadcast station can be added by the center such that the user can choose from a wider range of broadcast stations.

Moreover, the user can change the order of channels. For instance, channels can be configured in the order of music channel, information channel, and radio channel.

The channel/program information shown in Figure 10 having the aforementioned structure is downloaded to the information terminal as a part of the user profile in step 304, and stored in the information terminal. Figure 12 shows an example of format of the profile. Figure 12(a) is a configuration for selecting traffic information that the user needs. The configuration includes home/office locations, commuting path information, traffic information obtaining point, and traffic information updating period. The path is stored as a group of links identified by link ID. The traffic information obtaining point has the similar arrangement. The traffic information updating period is stored in terms of the number of minutes. If the updating information is to be sent by the center to the information terminal every updating period, the information terminal does not need to store this updating period data.

Figure 12(b) is an example of format of a channel. The number of channels, the number of programs per channel are variable. For instance, if numbers 1 through 6 are assigned as IDs to the records from the information records through the point record respectively, the format of a record can be identified by the channel ID. Figure 12(c) shows formats of each record. Here, records other than the music record and radio record, which have already been explained, will now be explained. In the information record, codes from 0 through 6 are assigned such that different codes indicate different information type, in the order of how much the information is desired. For instance, in the example shown in Figure 10, the order is 0,2,1,... The e-mail record merely states the maximum number of emails to be reported. The telephone record stores the name and phone number of a person such that the name and phone number correspond to one another. The point record stores the name of the point and its latitudinal/longitudinal coordinate position, such that the name and the coordination position correspond to one another.

In the program selection at step 307, the channels are provided in the order of information channel, e-mail channel, music channel, and radio channel as in Figure 10. Within each channel, programs are provided in the order of priority. The user key operations obtained in step 308 are mainly operations of the steering switch shown in Figure 6; the user key operations are mainly operations of wheel switch for controlling the progress of programs and operations of channel selection switch for selecting a channel.

The program selection by the wheel switch is the same as in the first embodiment; skip, repeat, back of a program can be performed by rotating the wheel. The channel selection switch newly added in the second embodiment allows selection of channel configured as shown in Figure 10. By pushing the button, channels are switched circularly such as in the order of information - e-mail - music - radio - telephone - point - information. In step 310, upon such key operations and according to the channel/program table in Figure 10, traffic information or news is read out using the text-to-speech conversion process, a radio station of the user's preference is selected by controlling the audio device embedded in the car, or packaged music is played.

Such operations can be done by voice commands such as "Skip", "Back", "Next channel", and "Previous channel" using the voice recognition process, instead of through the switches.

It is also possible to control the volume in step 308 and step 310 as in the first embodiment, such that the user needs to operate the volume adjustment less frequently. In the second embodiment, programs are provided by switching between various media and audio devices. First of all, the volume the user adjusted during the play is stored for each media. Next time a program is played by the same media in step 310, the program is outputted with the volume of the device being adjusted to the stored volume for the media. By virtue of this process, the volume can be automatically adjusted to the user-adjusted volume even when the audio device changes as the program changes. Therefore, the user needs to operate volume adjustment less frequently.

According to the aforementioned processes, the user can configure the program structure of his choice in advance using a personal computer. Accordingly, the information terminal in the car plays the music and information of the user's choice in the order of the user's choice. Therefore, the user needs to operate devices less frequently while the user is driving, when the safety is of importance. Also, the media and audio device to be utilized can be switched by an automatic control upon the user's simple operation. Therefore, the user needs to operate devices significantly less frequently when a plurality of devices needs to be controlled.

With regard to the music/information stored in the tagged broadcast, the information is treated the same way as the information obtained via the communication. The music can be treated the same way as packaged music by storing the music in a memory card or a hard disk drive.

Now, integration of operations of hands-free phone will be explained. As seen in the device structure view of the information terminal in Figure 6, the information terminal of the present embodiment is to be utilized with a phone connected thereto. The telephone module can also be installed inside the information terminal. In either case, the user would want hands-free phone ability so that he can talk without having to hold a phone.

First of all, the phone numbers to be called are listed under the telephone number column in Figure 9(a). The user selects numbers that he calls most often, and configures the telephone channel of Figure 10 such that the numbers are listed in the order of priority. By this configuration, when the user wishes to make a phone call in the car, he can select the telephone channel with the channel selection button shown in Figure 6, and select the person to call by the wheel switch. At this time, the name of the selected person to call is read out by the text-to-speech conversion process to notify the user who is about to be called. If the person being selected is the person the user wishes to call, the phone call is made automatically after a two-seconds waiting period. As the call is received, the rings are outputted by being inserted in the program. In the meantime; the user effectuates a talkable status by operating one of the steering switches. Such process is possible by controlling the phone according to the connection protocol between the information terminal and the phone.

Other operations are also possible. For instance, there may be a separate button for confirming the number. Or, the wheel switch can be configured to function as a push button when pushed downward, so as to be utilized as a confirmation button. Alternatively, the operations of the steering switch can be replaced with voice commands.

As stated above, operations of hands-free phone can be integrated with operations of obtainment of music/information, allowing the user to operate the device safely.

Now, integration of operations of car navigation function will be explained. The car navigation function refers to the ability to guide a path from the current position to a destination, and also to search a destination. The car navigation functions in the present embodiment are to be divided between the information terminal and the center in the following manner.
Short distance route guidance --- Information terminal
Configuration of stored point as destination --- Information terminal
Long distance route guidance --- Center
Search for destination --- Center

First of all, the stored point in Figure 9(a) and the destination are configured. The stored point can be configured by the user inputting position information (latitude/longitude) and the name of the point, or by the information terminal storing the point that the user has once visited and sending the stored point to the center. Each of the stored points in Figure 9(a) is given an order of priority, such that ones the user may need in the car are registered in the point channel in Figure 10.

In the car, the point channel is retrieved by pushing down the channel selection switch shown in Figure 6. Then a desired point is selected by operating the wheel switch. This selection can also be performed by a variation of the operational method for the phone channel described above. The selected stored point is configured as a destination within the information terminal. Thereafter, the paths from the current position to the destination are calculated automatically to give a route guidance to the driving user.

In the route guidance, as the current position detection means 101 detects that the user is approaching a guided inersection of the road based on calculated paths, the route guidance notifies the user which road he should turn into or gives the user a direction by audio. The audio message may be as follows.

"Turn right into Sakura street 300 meters ahead."

Such audio guiding message is a speech created by digitally recorded audio and text, and is stored as an insert in the program. By storing the audio guiding message, the user can replay the message for confirmation by simply operating the wheel switch as in the case with replay of a regular channel. In this manner, operations regarding car navigation route guidance can be integrated. Since audio guiding message is usually no longer needed once the user passed the guided inersection of the road properly or after a next audio guiding message has been outputted, the audio guiding message can be deleted from the program when it is not needed anymore.

On the other hand, the destination search in a wider range is not performed by the information terminal alone, but instead configured in the center. First of all, the user utilizes services on the Internet to plan a trip, such as by checking hotel availability and making a reservation. At this time, the user notifies the center where the user wishes to visit and where the hotel is located. This notification can be performed by sending to the center an e-mail or cutting and pasting the position information on the Web browser. The position information of the destination thus configured is stored under the destination column in Figure 9(a).

The destination information is downloaded from the center when the information terminal installed on the car accesses the center in step 302 on the day of trip. The destination information is then automatically configured as the destination of the information terminal. As in the example, if the user first needs to go to Rigge golf courses and then go to the ooo hotel, the position of the golf courses is configured as the destination initially. Once the user arrives at the golf courses, then the hotel is configured as the destination. In the case of a relatively long drive, the path calculated at the center can be downloaded to the information terminal in step 302 along with the destination.

There are other situations in which the center configures the destination. For instance, the destination can be configured based on the address, postal code, telephone numbers, and by searching Yellow page. Such complicated destination configuration is better performed using the high-end speech recognition/text-to-speech conversion device and/or operator in the center than by the information terminal in the car alone. For instance, when the user is looking for an Italian restaurant less than 10km away from the current position, a Yellow page installed on the car alone cannot provide information regarding reservation status for the day. Therefore, the user has to make a phone call for confirmation. If such search is performed at the center, the reservation status obtained on-line can be included in search criteria. Therefore, the user can narrow the search to Italian restaurants at which a reservation can be made on the day. By asking an operator to perform such search or asking the audio communication computer in the center by voice using the audio dialog technology, the destinations extracted by the search are displayed under the destination column in Figure 9(a) and reported to the information terminal.

The route guidance after the destination has been configured is the same as in the above explanation, and therefore will be omitted.

As stated above, operations of car navigation can be integrated with operations of music/information obtainment and hands-free telephone, allowing the user to operate the device safely.

The point channel shown in Figure 10 has an advertising point. This advertising point is used, for instance, in a case where a restaurant that is located on the road on which the user is driving and ahead of the user advertises its lunch menus. It is possible to improve the turn-around rate of customers per seat by adjusting prices of the lunch menus depending on the level of occupancy in the restaurant. For instance, when the occupancy of the restaurant is low, lunch menus may be offered for somewhat lower prices to capture customers quickly. Conversely, when the occupancy is high, the prices of the lunch menus may be raised to induce customers to other relatively cheaper restaurants. The restaurant can improve the turn-around rate of customers per seat, while users can easily find a restaurant with available seats. The advertisement point is a point at which positions of such restaurants are stored. By selecting the advertisement point, a route guidance to the restaurant is provided.

Lastly, an example of use of the information terminal explained above will be given based on a specific scenario. In this scenario, " " is a speech by the information terminal, [ ] is user's operation, ↑ and (↓) mean that the wheel switch has been rotated upward (downward) by 1 notch, and C means that the channel selection button has been pushed.
[Connect a wireless phone to the information terminal. Start the engine of the car.]
"Good morning. Checking the traffic situation of the commuting route. (3 seconds) There was an accident on the commuting route using highway. Calculating path to the office."
[Start the car.]
"Stay on Yamada Street. Headline news today. The first news is ... "
[Listen to the news for a while.]
"Here is news regarding food poisoning."
[↓]
"Skipping. That was the last news. Next is weather forecast."
"(In a different voice) An insert in the weather forecast. Turn right into Sakura street 500m ahead ..."
[↑]
"(In a different voice) Turn right into Sakura street 500m ahead. The rest is the same as usual."
"Returning to weather forecast. I will repeat from the beginning since there was an insert."
[↓]
"Skipping. Weather forecast from right after the insert."
[Listen to the weather forecast.]
"No rain forecasted. You have no mail this morning.
   Now moving on to stock information. OX Steel is ..."
[Listen to stock information]
"If you would like a stock memo e-mailed to your office, press any button."
[C]
"The stock memo has been sent. Now, enjoy your favorite music."
[Listen to the music with occasional skipping by ↓ and change of channels by C button, switching between CD, HDD, and digital radio automatically.]
"Here is a song recommended by the center."
[Listen to all of the digital music stored as digital broadcast.]
"If you liked it, please press a button so that I will keep a note of it."
[C]
"Understood. Please take a look at the next customized recommendations."
[Arrive at the Office.]
"Have a nice day at work."
[Stop the car. Stop the engine.]

As explained above, in the second embodiment, a user can configure his preference in the profile in advance. Since the information terminal structures and provides the program of the user's choice, the user can obtain music/information, route guidance information from various media such as communication, broadcast and packages with only simple operations to control the program as he/she drives, when safety is of importance. Accordingly, the user needs to perform operations of devices significantly less frequently. Furthermore, operations of hands-free phone and car navigation function can be integrated. Therefore, it is possible to provide music/data in a safe manner, in which the effect on user's driving operation is minimum.

As seen in the above described embodiments, according to the first aspect of the present invention, the user customizes the desired structure of programs and information contents. Therefore, during driving, the information terminal in the car provides music and information of the user's choice in the order of the user's choice. Accordingly, the user needs to operate the device less frequently. Besides, since controls of programs such as skip and repeat can be performed with a simple operation, such operation has a minimum effect on the driving operation. Furthermore, by having the record of operations in the car such as volume adjustment reflected on the structure of programs, the user can further dispense with unnecessary operations.

As a result, it is possible to provide music/information to the driving user in a safe manner.

According to the second embodiment, the user configures his preference in the profile in advance. Since the information terminal structures and provides programs of the user's preference, the user can obtain music/information from various media such as communication, broadcast and packages, and route guidance information with a simple operation to control the program as the user drives, when safety is of importance. Accordingly, the user needs to operate the device significantly less frequently. Besides, operations of hands-free phone and car navigation can be integrated. Therefore, it is possible to provide music/information in a safe manner with a minimum effect on the driving operation.

## Claims

1. A music/information provider device for providing music/data to a user, said music/information provider device being adapted to receive the music/information in a vehicle from an information provider station, the information provider station selectively distributing the music/information based on personal information including program information configured by the user, said music/information provider device comprising:
current position detection means for detecting current position of the vehicle;
input means for receiving operations to control progress of a program;
communication means for receiving at least the program information and music/information by communicating with the information provider station;
operation process means for obtaining the current position detected by said current position detection means and sending the music/information that said communication means received to output control means either directly or after processing;
memory means for storing at least the program information;
program control means for structuring a program of the user's choice according to operation information from said input means and the program information;
output control means for controlling at least audio output through said program control means; and
output means for outputting music/information through control of said output control means.

2. The music/information provider device as set forth in claim 1, wherein
said input means obtains operation information for controlling progress of a program by recognizing the user's speech.

3. The music/information provider device as set forth in claim 1 or 2, wherein
said input means receives at least the operation information that directs to stop the current program and play the next program;
said memory means stores this operation information; and
said operation process means updates the program information based on the stored operation information to change the order of provision for the program that has been stopped.

4. The music/information provider device as set forth in one of claims 1-3, wherein
said input means receives the operation information that at least directs to stop the current program and play the next program;
said memory means stores this operation information;
said operation process means sends the stored operation information and program provision information through said communication means; and
the user utilizes the operation information and the program provision information when he/she configures program information.

5. The music/information provider device as set forth in one of claims 1-4, wherein
said input means receives the operation information that at least directs control of output volume of the current program;
when the user adjusts the output volume, said memory means stores the output volume along with the current position obtained from said current position detection means; and
next time the vehicle approaches the position that has been stored previously, said operation process means provides programs through said output control means at the output volume which has been stored.

6. A music/information provider device for providing music/data to a user, said music/information provider device being adapted to receive the music/information in a vehicle from an information provider station, said music/information provider device being adapted to receive the music/information through communication as well as broadcast and packaged media, the information provider station selectively distributing the music/information based on personal information including program information configured by the user, said music/information provider device comprising:
current position detection means for detecting current position of the vehicle;
input means for receiving operations to control progress of a program;
communication means for receiving at least the program information and music/information by communicating with the information provider station;
broadcast receiving means for outputting broadcast contents it received directly to either output control means or selection means;
selection means for comparing data regarding broadcast contents and the personal information to send music/information of the user's preference to memory means;
an audio device for playing packaged media;
audio play means for creating audio signals from data stored in memory means;
operation process means for obtaining the current position detected by said current position detection means and sending the music/information that said communication means received to output control means either directly or after processing;
memory means for storing at least the program information;
program control means for structuring a program of the user's choice according to operation information from said input means and the program information;
output control means for controlling outputs from said audio device, said audio play means, and said broadcast receive means based on a command from said program control means; and
output means for outputting music/information through control of said output control means.

7. The music/information provider device as set forth in claim 6, wherein
said music/information provider device further includes text-to-speech conversion means for creating speech by reading out words or texts stored in said memory means; and
said output control means controls outputs from said audio device, said text-to-speech conversion means, said audio play means, and said broadcast receive means based on a command from said program control means.

8. The music/information provider device as set forth in claim 6 or 7, wherein
said input means obtains operation information for controlling progress of a program by recognizing the user's speech.

9. The music/information provider device as set forth in one of claims 6-8, wherein
said operation process means refers to said broadcast receive means and said audio device to create device information that indicates device installation of said music/information provider device, and sends the device information via said communication means, such that the user can utilize the device information when he/she configures the program information.

10. The music/information provider device as set forth in one of claims 6-9, wherein
said input means receives the operation information that at least directs to stop the current program and play the next program;
said memory means stores this operation information;
said operation process means updates the program information based on the stored operation information to change the order of provision for the program that has been stopped.

11. The music/information provider device as set forth in one of claims 6-10, wherein
said input means receives the operation information that at least directs to stop the current program and play the next program;
said memory means stores this operation information;
said operation process means sends the stored operation information and the program provision information through said communication means; and
the user utilizes the operation information and the program provision information when he/she configures program information.

12. The music/information provider device as set forth in one of claims 6-11, wherein
said input means receives the operation information that at least directs control of output volume of the current program;
when the user adjusts the output volume, said memory means stores the output volume along with the current position obtained from said current position detection means; and
next time the vehicle approaches the position that has been stored previously, said operation process means provides programs through said output control means at the output volume which has been stored.

13. The music/information provider device as set forth in one of claims 6-12, wherein
said input means receives the operation information that at least directs control of output volume of the current program;
when the user adjusts output volume when the program has been changed, said memory means stores the output volume along with a current output source;
next time a program is provided from the same output source, said operation process means provides the program through said output control means at the output volume which has been stored.

14. The music/information provider device as set forth in one of claims 1-13, wherein
the information provider station adds as a recommendation or an advertisement music/information that has been selected based on the user's preference according to the personal information including the program information configured by the user; and
the added program is provided to the user.

15. A music/information provider device for providing music/data to a user, said music/information provider device being adapted to receive the music/information in a vehicle from an information provider station, said music/information provider device being adapted to receive the music/information through communication as well as broadcast and packaged media, said music/information provider device further including hands-free phone function and car navigation function, the information provider station selectively distributing the music/information based on personal information including program information configured by the user, the personal information including a phone number and position information, said music/information provider device comprising:
current position detection means for detecting current position of the vehicle;
input means for receiving operations to control progress of a program;
communication means for receiving at least the program information and music/information by communicating with the information provider station, and making a call to a predetermined number according to the control from said input means and the personal information;
broadcast receiving means for outputting broadcast contents it received directly to either output control means or selection means;
selection means for comparing data regarding broadcast contents and the personal information to send music/information of the user's preference to memory means;
an audio device for playing packaged media;
text-to-speech conversion means for creating speech by reading out words or texts stored in memory means;
audio play means for creating audio signals from data stored in memory means;
operation process means for creating route guidance information at a predetermined timing based on the current position obtained from said current position detection means and sending the music/information that said communication means received to output control means either directly or after processing;
memory means for storing at least the program information;
program control means for structuring a program of the user's choice according to the operation information from said input means and the program information;
output control means for controlling outputs from said audio device, said text-to-speech means, said audio play means, and said broadcast receive means based on a command from said program control means; and
output means for outputting music/information through control of said output control means.

16. The music/information provider device as set forth in claim 15, wherein
said input means obtains operation information for controlling progress of a program by recognizing the user's speech.

17. The music/information provider device as set forth in claim 15 or 16, wherein
said operation process means refers to said broadcast receive means and said audio device to create device information that indicates device structure of said music/information provider device, and sends the device information via said communication means, such that the user can utilize the device information when he/she configures the program information.

18. The music/information provider device as set forth in one of claims 15-17, wherein
said input means receives the operation information that at least directs to stop the current program and play the next program;
said memory means stores this operation information;
said operation process means updates the program information based on the stored operation information to change the order of provision for the program that has been stopped.

19. The music/information provider device as set forth in one of claims 15-18, wherein
said input meáns receives the operation information that at least directs to stop the current program and play the next program;
said memory means stores this operation information;
said operation process means sends the stored operation information and the program provision information through said communication means; and
the user utilizes the operation information and the program provision information when he/she configures program information.

20. The music/information provider device as set forth in one of claims 15-18, wherein
said memory means memorizes the operation information that said input means received;
said operation process means sends the stored operation information and the program provision information through said communication means; and
the user utilizes the operation information and the program provision information when he/she configures program information.

21. The music/information provider device as set forth in one of claims 15-20, wherein
said input means receives the operation information that at least directs control of output volume of the current program;
when the user adjusts the output volume, said memory means stores the output volume along with the current position obtained from said current position detection means; and
next time the vehicle approaches the position that has been stored previously, said operation process means provides programs through said output control means at the output volume which has been stored.

22. The music/information provider device as set forth in one of claims 15-21, wherein
said input means receives the operation information that at least directs control of output volume of the current program;
when the user adjusts output volume when the program has been changed, said memory means stores the output volume along with a current output source;
next time a program is provided from the same output source, said operation process means provides programs through said output control means at the output volume which has been stored.

23. The music/information provider device as set forth in one of claims 15-22, wherein
the information provider station adds as a recommendation or an advertisement music/information that has been selected based on the user's preference according to the program information configured by the user and the personal information; and
the added program is provided to the user.

24. The music/information provider device as set forth in one of claims 15-23, wherein
said operation process means creates route guidance information at a predetermined timing based on the current position obtained from said current position detection means and adds the route guidance information to the program information.

25. The music/information provider device as set forth in claim 24, wherein
said operation process means deletes at a predetermined timing the route guidance information that has been created based on the current position obtained from said current position detection means and added to the program information.
